# EUROPEAN PATENT SPECIFICATION

(11) **EP 2 342 628 B1**
(45) Date of publication and mention of the grant of the patent: **20.11.2013**
(21) Application number: 09811846.6
(22) Date of filing: 04.09.2009
(51) Int. Cl.: G06F 7/00

(54) **INTEGRATION OF AN INTERNAL CLOUD INFRASTRUCTURE WITH EXISTING ENTERPRISE SERVICES AND SYSTEMS**
INTEGRATION EINER INTERNEN CLOUD-INFRASTRUKTUR MIT EXISTIERENDEN UNTERNEHMENSDIENSTEN UND SYSTEMEN
INTÉGRATION D'UNE INFRASTRUCTURE DE NUAGE INTERNE À DES SERVICES ET SYSTÈMES D'ENTREPRISE EXISTANTS

(30) Priority: 08.09.2008 US 95268 P; 31.03.2009 US 416070
(43) Date of publication of application: 13.07.2011
(73) Proprietor: eBay Inc., San Jose, CA 95125 (US)
(72) Inventor: TRAVOSTINO, Franco, San Jose California 95120 (US); SOVEREIGN, John, San Francisco California 94127 (US); VUL, Alexander, Palo Alto California 94303 (US); JESPERSEN, Hal, Redwood City California 94062 (US)
(74) Representative: Müller-Boré & Partner Patentanwälte
(86) International application number: PCT/US2009/004998
(87) International publication number: WO 2010/027489

(56) References cited:
- US-A1- 2007 061 456
- US-A1- 2008 177 839
- US-A1- 2008 177 839

## Description

### RELATED APPLICATIONS

This application claims priority benefit of U.S. Provisional Application No. 61/095,268, entitled, *"Integration of a Cloud Infrastructure into Existing Services,"* filed September 8, 2008 and U.S. Patent Application No. 12/416,070, entitled "*Integration of an Internal Cloud Infrastructure with Existing Enterprise Services and Systems*," filed March 31, 2009.

### TECHNICAL FIELD

The present application relates generally to the field of computer technology; and, in a specific exemplary embodiment, to a system and method of integrating an internal cloud infrastructure with legacy enterprise systems.

### BACKGROUND

In general, cloud computing is a computing paradigm in which tasks are assigned to a combination of connections, software, or services accessed over a network. This network of connections, software, and services is collectively known as a "cloud." Currently, the software and services for use in a "cloud" network are especially built or configured to be included in the cloud and, as a result, such specialized software and services cannot operate outside of the cloud.

Typically, in cloud computing, a third-party offers an allocation of hardware and software resources based on particular needs. The hardware and software resources are coupled to the Internet and become part of the cloud. In cloud computing, allocation of resources is dynamic and the resources are allocated as needed. In contrast, hosted computing requires a static allocation of resources with advance notification required along with an anticipated usage level.

However, even though a cloud computing structure can be highly cost-effective, as compared with having all the hardware and software resources in-house, there are still several issues that must be considered.

One of these issues involves a level of trust associated with the cloud computing structure. For example, when transmitting confidential material to a third-party cloud computing structure, the third-party cloud computing structure typically is not considered liable for an inadvertent release of any confidential material. Secondly, the third-party cloud computing structure must be able to always meet the peak demand load under a given service level agreement. The capability must include reliability and dependability of all system resources within the third-party cloud structure. However, usage levels of clients contracting with the third-party cloud computing structure can vary and a peak demand from multiple clients concurrently can far outpace computing capabilities within the cloud.

Document US 2008/0177839 A1 relates to a system for integrating disjoined but related network components. The system includes a network including a plurality of integrated collaborators where at least one of the integrated collaborators is designated as a head, at least one of the integrated collaborators is designated as a parent and at least one of the integrated collaborators is designated as a child.

Therefore, even though the third-party cloud computing structure may be cost effective, various issues such as those mentioned, limit the usefulness of third-party cloud computing. Thus, a more robust and trustworthy system is needed.

The present invention relates to a system architecture as claimed in claim 1, a method as claimed in claim 7, and a processor-readable storage medium as claimed in claim 12. Preferred embodiments are defined in the dependent claims.

### BRIEF DESCRIPTION OF DRAWINGS

Various ones of the appended drawings merely illustrate exemplary embodiments of the present invention and must not be considered as limiting its scope.
Fig. 1 depicts an exemplary block diagram of an integration of a cloud infrastructure into a pre-existing legacy system, in accordance with various embodiments described herein;
Fig. 2 depicts details of exemplary traditional processes in the pre-existing legacy system of Fig. 1;
Fig. 3 depicts a block diagram of an exemplary application programming interface to one of the components contained within the traditional processes of Fig. 2;
Fig. 4 depicts a flow diagram of a general overview of an exemplary method, in accordance with an exemplary embodiment, for the integration of the cloud computing infrastructure of Fig. 1; and
Fig. 5 is a simplified block diagram of a machine in an exemplary form of a computing system within which a set of instructions, for causing the machine to perform any one or more of the methodologies discussed herein, may be executed.

### DETAILED DESCRIPTION

The description that follows includes illustrative systems, methods, techniques, instruction sequences, and computing machine program products that embody the present invention. In the following description, for purposes of explanation, numerous specific details are set forth in order to provide an understanding of various embodiments of the inventive subject matter. It will be evident, however, to those skilled in the art that embodiments of the inventive subject matter may be practiced without these specific details. Further, well-known instruction instances, protocols, structures and techniques have not been shown in detail.

As used herein, the term "or" may be construed in an inclusive or exclusive sense. Similarly, the term "exemplary" may be construed merely to mean an example of something or an exemplar and not necessarily a preferred means of accomplishing a goal. Additionally, although various exemplary embodiments discussed below focus on an existing enterprise in a business environment, the embodiments are merely given for clarity in disclosure. Thus, any type of enterprise system such as a governmental system (including schools, court houses, and other judicially-related systems, etc.), religious, or any other non-business environment, is considered as being within the scope of the present invention. Further, an internal cloud structure or internal cloud computing infrastructure is provided merely for clarity. Any cloud structure or cloud infrastructure may be located remotely to an enterprise and is still to be considered as being within a scope of the present invention.

In an exemplary embodiment, system architecture to provide cloud computing in an existing enterprise is disclosed. The system architecture comprises a service communications interface and an infrastructure communications interface. A cloud structure is communicatively coupled to the service communications interface and the infrastructure communications interface, with the cloud structure arranged to be coupled through the service communications interface to individual business units. The cloud structure is further arranged to be coupled through the infrastructure communications interface to a plurality of enterprise resources.

In another exemplary embodiment, a method to integrate a cloud structure in an enterprise environment with a plurality of enterprise resources is disclosed. The method comprises establishing a service communications interface between the cloud structure and individual business units within the enterprise environment, and establishing an infrastructure communications interface between the enterprise resources and the cloud structure.

In another exemplary embodiment, a processor-readable storage medium storing an instruction that, when executed by a processor, causes the processor to perform a method to integrate a cloud structure in an enterprise environment with a plurality of enterprise resources is disclosed. The method comprises establishing a service communications interface between the cloud structure and individual business units within the enterprise environment, and establishing an infrastructure communications interface between enterprise resources and the cloud structure.

In another exemplary embodiment, a system for providing cloud computing in an existing enterprise is disclosed. The system comprises a service communications means, an infrastructure communications interface means, and a cloud means. The cloud means is communicatively coupled to the service communications interface means for interfacing with a plurality of individual business units and the infrastructure communications interface means for interfacing to a plurality of enterprise resources.

Each of these exemplary embodiments, and others, is discussed in detail, below.

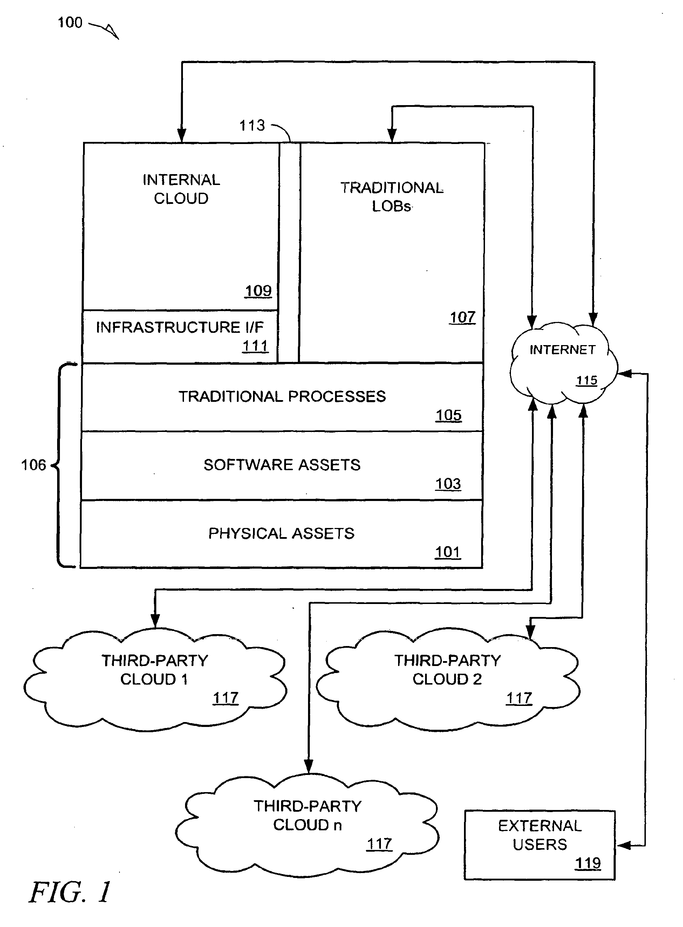

With reference to Fig. 1, an exemplary block diagram 100 includes a plurality of resources 106 in a pre-existing legacy system. The plurality of resources 106 includes a physical asset layer 101, a software asset layer 103, and a traditional processes layer 105. The plurality of resources 106, in general, may also include people, processes, technology, information, and a host of other tangible and intangible assets associated with a business enterprise.

A traditional line of businesses (LOBs) 107 include, for example, individual business units, individual product lines, an auction site accessible externally to a plurality of users outside the enterprise, or a plurality of peripheral external business groups. The business groups may be located within an overall enterprise structure, or, alternatively, may remotely be located in various parts of the world.

An internal cloud computing infrastructure 109 may be physically located within the overall enterprise structure, or may be located remotely. The internal cloud computing infrastructure 109 includes various systems and subsystems (not shown but understandable to a skilled artisan), such as application services and platform services. The application services include services such as the creation of a cloud account, the deployment of applications, the closure of cloud accounts, and initialization and termination of resource collections. The platform services include, for example, monitoring of resource collections, management of capacity policies, addition of cloud capacities, and other services.

The internal cloud computing infrastructure 109 interfaces to the plurality of resources 106 through an infrastructure communications interface (I/F) 111. The infrastructure communications interface 111 may be comprised of a hardwired interface, a wireless communications interface, or a hybrid combination of the two. Further, the internal cloud computing infrastructure 109 is interfaced to the traditional line of businesses 107 through a service communications interface 113. As with the infrastructure communications interface 111, the service communications interface 113 may also be comprised of, for example, a hardwired interface, a wireless communications interface, or a hybrid combination of the two.

With continued reference to Fig. 1, the internal cloud computing infrastructure 109 and the traditional line of businesses 107 may be coupled to the Internet 115. The Internet 115 could also be another type of network. In the exemplary block diagram 100, the Internet 115 may be further coupled to a plurality of third-party cloud computing providers 117. Further, both the internal cloud computing infrastructure 109 and the traditional lines of businesses 107 may be accessible by a plurality of external users 119 through the Internet 115. The plurality of external users 119 may be, for example, customers purchasing products or placing a bid at an auction site, both part of the traditional line of businesses 107.

The internal cloud computing infrastructure 109 may be similar in structure to the plurality of third-party cloud computing providers 117. However, the internal cloud computing infrastructure 109 is only accessible to the traditional line of businesses 107 through the service communications interface 113 and the plurality of resources 106 through the infrastructure communications interface 111. Therefore, the internal cloud computing infrastructure 109 eliminates concerns about trust issues of confidential material, dependability and reliability issues (since all maintenance can be performed in-house), and maintaining an expected quality of service (since peak demand loads are generally known to the enterprise internally). Also, the internal cloud computing infrastructure 109 provides a high return on investment, since it is shared by all groups and departments within the enterprise. For example, resources within the physical asset layer 101 (e.g., such as existing computers, network systems, telecommunications systems, and other hardware), and the software asset layer 103 (e.g., software running on and within existing computers and telecommunications systems), may all work with the internal cloud computing infrastructure 109 through the infrastructure communications interface 111. Additionally, each of the traditional line of businesses 107 can access all capabilities of the internal cloud computing infrastructure 109 through the service communications interface 113. Thus, the traditional line of businesses 107 and the internal cloud computing infrastructure 109 may separately access the plurality of resources 106, either individually or concurrently.

Moreover, the internal cloud computing infrastructure 109 may be configured to separately bill for services. Each department or business unit within the traditional line of businesses 107 may be billed for usage time. Billing is readily achievable, since both the internal cloud computing infrastructure 109 in the traditional line of businesses 107 are linked to be traditional processes layer 105. The traditional processes layer 105 is discussed in detail below, and may include functions such as asset management and accounting. Further, each of the traditional line of businesses 107 may be back-charged for items such as depreciation of the internal cloud computing infrastructure 109 based on usage levels.

Since the plurality of third-party cloud computing providers 117 are still accessible by the internal cloud computing infrastructure 109, peak demands of, for example, non-confidential material, may still be outsourced through the Internet 115. The outsourcing allows the enterprise to provide substantial computing power and other resources within the enterprise, while still maintaining outside capabilities for peak demand periods. By integrating the internal cloud computing infrastructure 109 within the enterprise, pre-existing legacy systems may still be utilized and a high degree of automation is afforded within the enterprise. For example, in a specific exemplary embodiment, a huge scale of integration is achievable such as providing more than 10,000 servers with an ability to handle electronic (e.g., Internet-based) traffic of more than two billion page views per day. This level of integration is especially useful in enterprise situations such as e-commerce that require a high degree of automation in a highly secure environment.

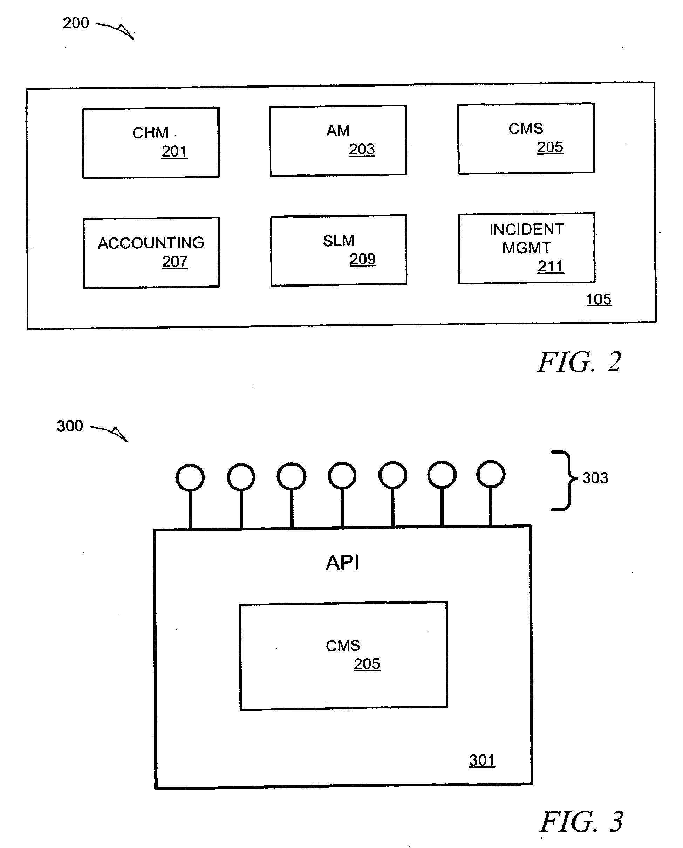

Referring now to Fig. 2, a specific detailed embodiment 200 or the traditional processes layer 105 of Fig. 1 includes a change management group (CHM) 201, an asset management (AM) group 203, a configuration management service (CMS) group 205, an accounting group 207, a service level management group (SLM) 209, and an incident management group 211. The traditional processes layer 105 or other portions of the plurality of resources 106 of Fig. 1 may also include, for example, virtualized central processing units (CPUs), e-Commerce Virtual Appliances (eVAs), storage units, databases, and load balancers. Additionally, a skilled artisan will appreciate that resources may have several states, such as a performance state, an operational state (e.g., up or down), an administrative state (e.g., system administrator check, and DEBUG), and a configuration state (e.g., pending What It Should Be (WISB), audited WISB, and delta between What It Really Is (WIRI) and WISB).

Each of these aforementioned groups may be equivalent to traditional groups typically encountered in any business enterprise. The groups may each include separate or overlapping people, processes, technology, and information. As noted above, each of these groups is accessible independently or concurrently by the internal cloud computing infrastructure 109 of Fig. 1 and the traditional line of businesses 107 of Fig. 1.

In Fig. 3, a specific exemplary embodiment of the configuration management service group 205 of Fig. 2 is shown "wrapped" in an exemplary application programming interface (API) 301 with excess the internal cloud computing infrastructure 109, the traditional line of businesses 107, to other groups, and to other layers through a simplified communications interface 303. Thus, in this specific exemplary embodiment, the configuration management service group 205 may be considered to be a piece of hardware, or alternatively, a hardware/software combination.

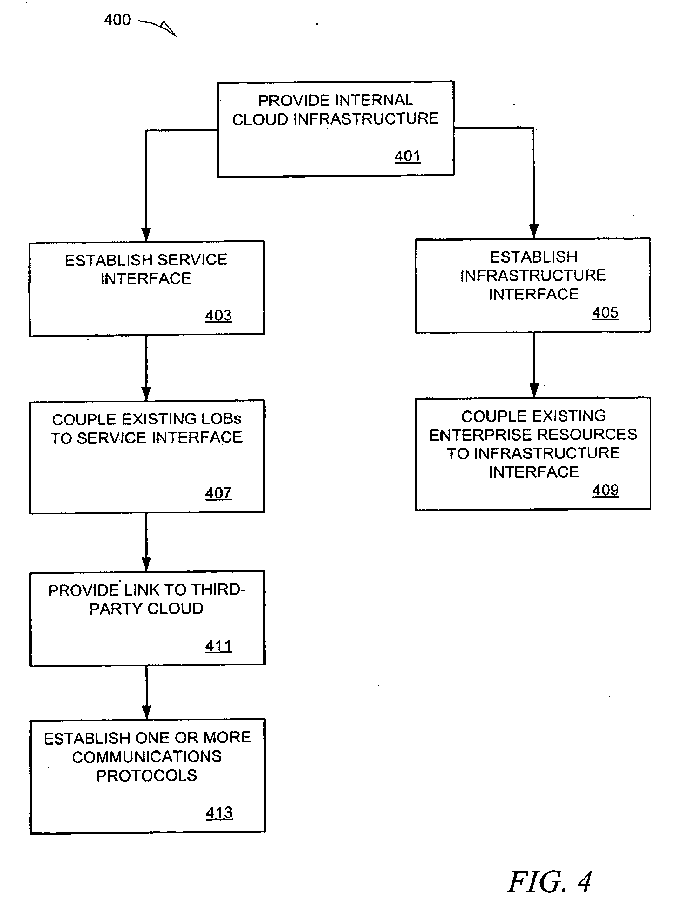

With reference now to Fig. 4, a flowchart 400 provides an overview of an exemplary method for integrating the internal cloud computing infrastructure 109 (Fig. 1) into an enterprise legacy system. The exemplary method includes providing an internal cloud infrastructure 401, establishing a service interface 403, establishing an infrastructure interface 405, coupling an existing line of businesses 407 to the service interface, and coupling existing enterprise legacy resources 409 to the infrastructure interface. Once the existing line of businesses and enterprise legacy resources have been coupled to their respective interfaces, the internal cloud computing infrastructure is integrated into the business enterprise.

Optionally, the exemplary method may also include providing a link to a third-party cloud 411, and establishing one or more system-wide communications protocols 413. The system-wide communications protocols may be any type of communications protocol known independently in the art.

While various embodiments of the present invention are described with reference to assorted implementations and exploitations, it will be understood that these embodiments are illustrative only and that a scope of the present inventions are not limited to them. In general, techniques for cloud infrastructure integration may be implemented with facilities consistent with any hardware system or hardware systems defined herein. Many variations, modifications, additions, and improvements are possible.

Plural instances may be provided for resources, operations, or structures described herein as a single instance. Finally, boundaries between various resources, operations, and data stores are somewhat arbitrary, and particular operations are illustrated in a context of specific illustrative configurations. Other allocations of functionality are envisioned and may fall within a scope of various embodiments of the present invention. In general, structures and functionality presented as separate resources in the exemplary configurations may be implemented as a combined structure or resource. Similarly, structures and functionality presented as a single resource may be implemented as separate resources. These and other variations, modifications, additions, and improvements fall within a scope of the present invention is represented by the appended claims.

### Modules, Components, and Logic

Additionally, certain embodiments described herein may be implemented as logic or a number of modules, components, or mechanisms. A module, logic, component, or mechanism (collectively referred to as a "module") may be a tangible unit capable of performing certain operations and is configured or arranged in a certain manner. In certain exemplary embodiments, one or more computer systems (e.g., a standalone, client, or server computer system) or one or more components of a computer system (e.g., a processor or a group of processors) may be configured by software (e.g., an application or application portion) or firmware (note that software and firmware can generally be used interchangeably herein as is known by a skilled artisan) as a module that operates to perform certain operations described herein.

In various embodiments, a module may be implemented mechanically or electronically. For example, a module may comprise dedicated circuitry or logic that is permanently configured (e.g., within a special-purpose processor) to perform certain operations. A module may also comprise programmable logic or circuitry (e.g., as encompassed within a general-purpose processor or other programmable processor) that is temporarily configured by software or firmware to perform certain operations. It will be appreciated that a decision to implement a module mechanically, in the dedicated and permanently configured circuitry, or in temporarily configured circuitry (e.g., configured by software) may be driven by cost and time considerations.

Accordingly, the term module should be understood to encompass a tangible entity, be that an entity that is physically constructed, permanently configured (e.g., hardwired), or temporarily configured (e.g., programmed) to operate in a certain manner and/or to perform certain operations described herein. Considering embodiments in which modules or components are temporarily configured (e.g., programmed), each of the modules or components need not be configured or instantiated at any one instance in time. For example, where the modules or components comprise a general-purpose processor configured using software, the general-purpose processor may be configured as respective different modules at different times. Software may accordingly configure the processor to constitute a particular module at one instance of time and to constitute a different module at a different instance of time.

Modules can provide information to, and receive information from, other modules. Accordingly, the described modules may be regarded as being communicatively coupled. Where multiples of such modules exist contemporaneously, communications may be achieved through signal transmission (e.g., over appropriate circuits and buses) that connect the modules. In embodiments in which multiple modules are configured or instantiated at different times, communications between such modules may be achieved, for example, through the storage and retrieval of information in memory structures to which the multiple modules have access. For example, one module may perform an operation, and store the output of that operation in a memory device to which it is communicatively coupled. A further module may then, at a later time, access the memory device to retrieve and process the stored output. Modules may also initiate communications with input or output devices and can operate on a resource (e.g., a collection of information).

### Electronic Apparatus and System

Exemplary embodiments may be implemented in analog, digital, or hybrid electronic circuitry, or in computer hardware, firmware, software, or in combinations thereof. Exemplary embodiments may be implemented using a computer program product, for example, a computer program tangibly embodied in an information carrier (e.g., in a machine-readable medium for execution by, or to control the operation of, data processing apparatus, for example, a programmable processor, a computer, or multiple computers).

A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

In certain exemplary embodiments, operations may be performed by one or more programmable processors executing a computer program to perform functions by operating on input data and generating output. Method operations can also be performed by, and apparatus of exemplary embodiments may be implemented as, special purpose logic circuitry (e.g:, a field programmable gate array (FPGA) or an application-specific integrated circuit (ASIC)).

The computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that both hardware and software architectures require consideration. Specifically, it will be appreciated that the choice of whether to implement certain functionality in permanently configured hardware (e.g., an ASIC), in temporarily configured hardware (e.g., a combination of software and a programmable processor), or a combination permanently and temporarily configured hardware may be a design choice. Below are set out hardware (e.g., machine) and software architectures that may be deployed, in various exemplary embodiments.

### Exemplary Machine Architecture and Machine-Readable Medium

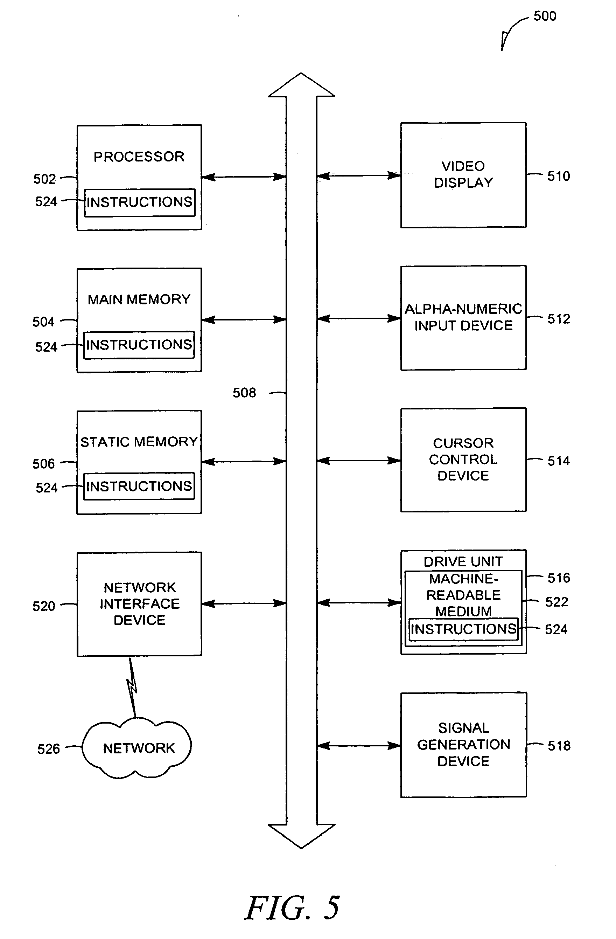

With reference to Fig. 5, an exemplary embodiment extends to a machine in the exemplary form of a computer system 500 within which instructions, for causing the machine to perform any one or more of the methodologies discussed herein, may be executed. In alternative exemplary embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a network router, a switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The exemplary computer system 500 includes a processor 502 (e.g., a central processing unit (CPU), a graphics processing unit (GPU) or both), a main memory 504 and a static memory 506, which communicate with each other via a bus 508. The computer system 500 may further include a video display unit 510 (e.g., a liquid crystal display (LCD) or a cathode ray tube (CRT)). The computer system 500 also includes an alphanumeric input device 512 (e.g., a keyboard), a user interface (UI) navigation device 514 (e.g., a mouse), a disk drive unit 516, a signal generation device 518 (e.g., a speaker), and a network interface device 520.

### Machine-Readable Medium

The disk drive unit 516 includes a machine-readable medium 522 on which is stored one or more sets of instructions and data structures (e.g., software 524) embodying or utilized by any one or more of the methodologies or functions described herein. The software 524 may also reside, completely or at least partially, within the main memory 504 or within the processor 502 during execution thereof by the computer system 500; the main memory 504 and the processor 502 also constituting machine-readable media.

While the machine-readable medium 522 is shown in an exemplary embodiment to be a single medium, the term "machine-readable medium" may include a single medium or multiple media (e.g., a centralized or distributed database, or associated caches and servers) that store the one or more instructions. The term "machine-readable medium" shall also be taken to include any tangible medium that is capable of storing, encoding, or carrying instructions for execution by the machine and that cause the machine to perform any one or more of the methodologies of the present invention, or that is capable of storing, encoding, or carrying data structures utilized by or associated with such instructions. The term "machine-readable medium" shall accordingly be taken to include, but not be limited to, solid-state memories, and optical and magnetic media. Specific examples of machine-readable media include nonvolatile memory, including by way of exemplary semiconductor memory devices (e.g., EPROM, EEPROM, and flash memory devices); magnetic disks such as internal hard disks and removable disks; magneto-optical disks; and CD-ROM and DVD-ROM disks.

### Transmission Medium

The software 524 may further be transmitted or received over a communications network 522 using a transmission medium via the network interface device 520 utilizing any one of a number of well-known transfer protocols (e.g., HTTP). Examples of communication networks include a local area network (LAN), a wide area network (WAN), the Internet, mobile telephone networks, Plain Old Telephone (POTS) networks, and wireless data networks (e.g., WiFi and WiMax networks). The term "transmission medium" shall be taken to include any intangible medium that is capable of storing, encoding, or carrying instructions for execution by the machine, and includes digital or analog communications signals or other intangible medium to facilitate communication of such software.

### Exemplary Three-Tier Software Architecture

In some embodiments, the described methods may be implemented using a distributed or non-distributed software application designed under a three-tier architecture paradigm. Under this paradigm, various parts of computer code (or software) that instantiate or configure components or modules may be categorized as belonging to one or more of these three tiers. Some embodiments may include a first tier as an interface (e.g., an interface tier). Further, a second tier may be a logic (or application) tier that performs application processing of data input through the interface level. The logic tier may communicate the results of such processing to the interface tier, or to a backend or storage tier. The processing performed by the logic tier may relate to certain rules or processes that govern the software as a whole. A third storage tier may be a persistent storage medium, or a non-persistent storage medium. In some cases, one or more of these tiers may be collapsed into another, resulting in a two-tier architecture, or even a one-tier architecture. For example, the interface and logic tiers may be consolidated, or the logic and storage tiers may be consolidated, as in the case of a software application with an embedded database. The three-tier architecture may be implemented using one technology or a variety of technologies. The exemplary three-tier architecture, and the technologies through which it is implemented, may be realized on one or more computer systems operating, for example, as a standalone system, or organized in a server-client, peer-to-peer, distributed, or some other suitable configuration. Further, these three tiers may be distributed between more than one computer system as various components.

### Components

Exemplary embodiments may include the above described tiers, and processes or operations about constituting these tiers may be implemented as components. Common to many of these components is an ability to generate, use, and manipulate data. The components, and the functionality associated with each, may form part of standalone, client, server, or peer computer systems. The various components may be implemented by a computer system on an as-needed basis. These components may include software written in an object-oriented computer language such that a component oriented or object-oriented programming technique can be implemented using a Visual Component Library (VCL), Component Library for Cross Platform (CLX), JavaBeans (JB), Enterprise JavaBeans™ (EJB), Component Object Model (COM), Distributed Component Object Model (DCOM), or any other suitable technique.

Software for these components may further enable communicative coupling to other components (e.g., via various APIs), and may be compiled into one complete server, client, or peer software application. Further, these APIs may be able to communicate through various distributed programming protocols as distributed computing components.

### Distributed Computing Components and Protocols

Some exemplary embodiments may include remote procedure calls being used to implement one or more of the above described components across a distributed programming environment as distributed computing components. For example, an interface component (e.g., an interface tier) may form part of a first computer system that is remotely located from a second computer system containing a logic component (e.g., a logic tier). These first and second computer systems may be configured in a standalone, server-client, peer-to-peer, or some other suitable configuration. Software for the components may be written using the above described object-oriented programming techniques and can be written in the same programming language or a different programming language. Various protocols may be implemented to enable these various components to communicate regardless of the programming language used to write these components. For example, a component written in C++ may be able to communicate with another component written in the Java programming language through utilizing a distributed computing protocol such as a Common Object Request Broker Architecture (CORBA), a Simple Object Access Protocol (SOAP), or some other suitable protocol. Some embodiments may include the use of one or more of these protocols with the various protocols outlined in the Open Systems Interconnection (OSI) model or Transmission Control Protocol/Internet Protocol (TCP/IP) protocol stack model for defining the protocols used by a network to transmit data.

### A System of Transmission between a Server and Client

Exemplary embodiments may use the OSI model or TCP/IP protocol stack model for defining protocols used by a network to transmit data. In applying these models, a system of data transmission between a server and client, or between peer computer systems, may, for example, include five layers comprising: an application layer, a transport layer, a network layer, a data link layer, and a physical layer. In the case of software for instantiating or configuring components having a three-tier architecture, the various tiers (e.g., the interface, logic, and storage tiers) reside on the application layer of the TCP/IP protocol stack. In an exemplary implementation using the TCP/IP protocol stack model, data from an application residing at the application layer is loaded into the data load field of a TCP segment residing at the transport layer. This TCP segment also contains port information for a recipient software application residing remotely. This TCP segment is loaded into the data load field of an IP datagram residing at the network layer. Next, this IP datagram is loaded into a frame residing at the data link layer. This frame is then encoded at the physical layer, and the data are transmitted over a network such as an internet, LAN, WAN, or some other suitable network. In some cases, Internet refers to a network of networks. These networks may use a variety of protocols for the exchange of data, including the aforementioned TCP/IP, and additionally ATM, SNA, SDI, or some other suitable protocol. These networks may be organized within a variety of topologies (e.g., a star topology) or structures.

Although an embodiment has been described with reference to specific exemplary embodiments, it will be evident that various modifications and changes may be made to these embodiments without departing from the broader scope of the invention. Accordingly, the specification and drawings are to be regarded in an illustrative rather than a restrictive sense. The accompanying drawings that form a part hereof show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. The Detailed Description, therefore, is not to be taken in a limiting sense, and the scope of various embodiments is defined only by the appended claims, along with the full range of equivalents to which such claims are entitled.

Such embodiments of the inventive subject matter may be referred to herein, individually or collectively, by the term "invention" merely for convenience and without intending to voluntarily limit the scope of this application to any single invention or inventive concept if more than one is, in fact, disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

For example, particular embodiments describe various arrangements, algorithms, programming tools, and topologies of systems. A skilled artisan will recognize, however, that additional embodiments may be focused on performance and usability of the internal cloud infrastructure system.

These and various other embodiments are all within a scope of the present invention. The specification and drawings are, accordingly, to be regarded in an illustrative rather than a restrictive sense.

## Claims

1. A system architecture to provide cloud computing in an existing enterprise, the system architecture comprising:
an internal cloud structure (109) to operate as a portion of the existing enterprise, the internal cloud structure (109) configured to be communicatively coupled to one or more third-party cloud computing structures (117), the one or more third-party cloud computing structures (117) not being a part of the existing enterprise;
a service communications interface (113) configured to provide a communications inter-face between a plurality of business units in the existing enterprise and the internal cloud structure (109); and
an infrastructure communications interface (111) comprised of a plurality of application programming interfaces configured to communicatively couple the internal cloud structure (109) to a pre-existing plurality of enterprise resources (106) of the existing enterprise.

2. The system architecture of claim 1 further comprising the pre-existing plurality of enterprise resources (106), wherein the pre-existing plurality of enterprise resources (106) is comprised of a plurality of hardware (101) and software (103) resources.

3. The system architecture of claim 1 further comprising an interface within the pre-existing plurality of enterprise resources (106) to be coupled to the one or more third-party cloud computing structures (117).

4. The system architecture of claim 1 further comprising an interface configured to couple the pre-existing plurality of individual business units to the one or more third-party cloud computing structures (117).

5. The system architecture of claim 1 further comprising an interface configured to couple the internal cloud structure (109) and the plurality of individual business units to a plurality of external users (119).

6. The system architecture of claim 1 further comprising the pre-existing plurality of enterprise resources (106), wherein the pre-existing plurality of enterprise resources (106) is configured to be accessible individually and concurrently between the internal cloud structure (109) and the plurality of individual businesses.

7. A method to integrate an internal cloud structure (109) in an existing enterprise environment with a plurality of pre-existing enterprise resources, the method comprising:
arranging the internal cloud structure (109) to electronically communicate with one or more external third-party cloud computing structures (117), the one or more third-party cloud computing structures (117) not being a part of the existing enterprise;
establishing a service communications interface (113) between the internal cloud structure (109) and a plurality of individual business units within the enterprise environment;
establishing an infrastructure communications interface (111) between the pre-existing plurality of enterprise resources (106) and the internal cloud structure (109); and
establishing a plurality of communications protocols allowing communications between at least the internal cloud structure (109), the one or more external third-party cloud computing structures (117), and the pre-existing enterprise resources (106).

8. The method of claim 7 further comprising communicatively coupling the pre-existing plurality of enterprise resources (106) to the service communications interface (113).

9. The method of claim 7 further comprising coupling the plurality of individual business units within the enterprise environment to the infrastructure communications interface (111).

10. The method of claim 7 further comprising providing a communications link between the plurality of individual business units within the enterprise environment and the one or more external third-party cloud computing structures (117).

11. The method of claim 7 further comprising establishing a common communications protocol between the internal cloud structure (109), the plurality of individual business units, and the plurality of pre-existing enterprise resources (106).

12. A non-transitory processor-readable storage medium storing instructions that, when executed by a processor, causes the processor to perform a method to integrate an internal cloud structure in an enterprise environment with a plurality of pre-existing enterprise resources according to a method of any one of claims 7 to 11.

## Patentansprüche

1. Systemarchitektur zum Bereitstellen von Cloud Computing in einem bestehenden Unternehmen, wobei die Systemarchitektur umfasst:
eine interne Cloud-Struktur (109), die als ein Abschnitt des bestehenden Unternehmens arbeitet, wobei die interne Cloud-Struktur (109) konfiguriert ist, kommunikativ mit einer oder mehreren Drittpartei-Cloud-Computing-Strukturen (117) gekoppelt zu sein, wobei die eine oder mehreren Drittpartei-Cloud-Computing-Strukturen (117) kein Teil des bestehenden Unternehmens sind;
eine Dienstkommunikationsschnittstelle (113), die konfiguriert ist, eine Kommunikationsschnittstelle zwischen einer Mehrzahl von Geschäftseinheiten in dem bestehenden Unternehmen und der internen Cloud-Struktur (109) bereitzustellen;
eine Infrastrukturkommunikationsschnittstelle (111), die aus einer Mehrzahl von Anwendungsprogrammschnittstellen besteht, die konfiguriert sind, die interne Cloud-Struktur (109) mit einer schon bestehenden Mehrzahl von Unternehmensressourcen (106) des bestehenden Unternehmens kommunikativ zu koppeln.

2. Systemarchitektur nach Anspruch 1, ferner umfassend die schon bestehende Mehrzahl von Unternehmensressourcen (106), wobei die schon bestehende Mehrzahl von Unternehmensressourcen (106) aus einer Mehrzahl von Hardware(101)- und Software(103)-Ressourcen besteht.

3. Systemarchitektur nach Anspruch 1, ferner umfassend eine Schnittstelle in der schon bestehenden Mehrzahl von Unternehmensressourcen (106), die mit der einen oder den mehreren Drittpartei-Cloud-Computing-Strukturen (117) zu koppeln ist.

4. Systemarchitektur nach Anspruch 1, ferner umfassend eine Schnittstelle, die konfiguriert ist, die schon bestehende Mehrzahl einzelner Geschäftseinheiten mit der einen oder den mehreren Drittpartei-Cloud-Computing-Strukturen (117) zu koppeln.

5. Systemarchitektur nach Anspruch 1, ferner umfassend eine Schnittstelle, die konfiguriert ist, die interne Cloud-Struktur (109) und die Mehrzahl einzelner Geschäftseinheiten mit einer Mehrzahl externer Benutzer (119) zu koppeln.

6. Systemarchitektur nach Anspruch 1, ferner umfassend die schon bestehende Mehrzahl von Unternehmensressourcen (106), wobei die schon bestehende Mehrzahl von Unternehmensressourcen (106) konfiguriert ist, zwischen der internen Cloud-Struktur (109) und der Mehrzahl einzelner Geschäftseinheiten individuell und gleichzeitig zugänglich zu sein.

7. Verfahren zum Integrieren einer internen Cloud-Struktur (109) in einer bestehenden Unternehmensumgebung mit einer Mehrzahl schon bestehender Unternehmensressourcen, wobei das Verfahren umfasst:
Anordnen der internen Cloud-Struktur (109), um elektronisch mit einer oder mehreren externen Drittpartei-Cloud-Computing-Strukturen (117) zu kommunizieren, wobei die eine oder mehreren Drittpartei-Cloud-Computing-Strukturen (117) kein Teil des bestehenden Unternehmens sind;
Herstellen einer Dienstkommunikationsschnittstelle (113) zwischen der internen Cloud-Struktur (109) und einer Mehrzahl von einzelnen Geschäftseinheiten in der bestehenden Unternehmensumgebung;
Herstellen einer Infrastrukturkommunikationsschnittstelle (111) zwischen der schon bestehenden Mehrzahl von Unternehmensressourcen (106) und der internen Cloud-Struktur (109); und
Herstellen einer Mehrzahl von Kommunikationsprotokollen, die Kommunikationen zwischen zumindest der internen Cloud-Struktur (109), der einen oder mehreren externen Drittpartei-Cloud-Computing-Strukturen (117) und den schon bestehenden Unternehmensressourcen (106) erlauben.

8. Verfahren nach Anspruch 7, ferner umfassend das kommunikative Koppeln der schon bestehenden Mehrzahl von Unternehmensressourcen (106) mit der Dienstkommunikationsschnittstelle (113).

9. Verfahren nach Anspruch 7, ferner umfassend das Koppeln der Mehrzahl einzelner Geschäftseinheiten in der Unternehmensumgebung mit der Infrastrukturkommunikationsschnittstelle (111).

10. Verfahren nach Anspruch 7, ferner umfassend das Bereitstellen einer Kommunikationsverbindung zwischen der Mehrzahl einzelner Geschäftseinheiten in der Unternehmensumgebung und der einen oder den mehreren externen Drittpartei-Cloud-Computing-Strukturen (117).

11. Verfahren nach Anspruch 7, ferner umfassend das Herstellen eines gemeinsamen Kommunikationsprotokolls zwischen der internen Cloud-Struktur (109), der Mehrzahl einzelner Geschäftseinheiten und der Mehrzahl schon bestehender Unternehmensressourcen (106).

12. Nicht transitorisches prozessorlesbares Speichermedium, das Instruktionen speichert, die, wenn durch einen Prozessor ausgeführt, den Prozessor veranlassen, ein Verfahren zum Integrieren einer internen Cloud-Struktur in einer Unternehmensumgebung mit einer Mehrzahl schon bestehender Unternehmensressourcen gemäß einem Verfahren nach einem der Ansprüche 7 bis 11 durchzuführen.

## Revendications

1. Architecture de système pour fournir l'informatique en nuage dans une entreprise existante, l'architecture de système comprenant :
une structure de nuage interne (109) pour opérer en tant que portion de l'entreprise existante, la structure de nuage interne (109) étant configurée pour être raccordée de manière communicative à une ou plusieurs structures d'informatique en nuage tierces (117), la ou les structures d'informatique en nuage tierces (117) ne faisant pas partie de l'entreprise existante ;
une interface de communications de service (113) configurée pour fournir une interface de communications entre une pluralité d'unités commerciales dans l'entreprise existante et la structure de nuage interne (109) ; et
une interface de communications d'infrastructure (111) constituée d'une pluralité d'interfaces de programmation d'application configurée pour raccorder de manière communicative la structure de nuage interne (109) à une pluralité préexistante de ressources d'entreprise (106) de l'entreprise existante.

2. Architecture de système selon la revendication 1, comprenant en outre la pluralité préexistante de ressources d'entreprise (106), dans lequel la pluralité préexistante de ressources d'entreprise (106) est constituée d'une pluralité de ressources matérielles (101) et logicielles (103).

3. Architecture de système selon la revendication 1, comprenant en outre une interface au sein de la pluralité préexistante de ressources d'entreprise (106) devant être raccordée à une ou plusieurs structures d'informatique en nuage tierces (117).

4. Architecture de système selon la revendication 1, comprenant en outre une interface configurée pour raccorder la pluralité préexistante d'unités commerciales individuelles à la ou les structures d'informatique en nuage tierces (117).

5. Architecture de système selon la revendication 1, comprenant en outre une interface configurée pour raccorder la structure de nuage interne (109) et la pluralité d'unités commerciales individuelles à une pluralité d'utilisateurs externes (119).

6. Architecture de système selon la revendication 1, comprenant en outre la pluralité préexistante de ressources d'entreprise (106), dans lequel la pluralité préexistante de ressources d'entreprise (106) est configurée pour être accessible individuellement et de manière concomitante entre la structure de nuage interne (109) et la pluralité de commerces individuels.

7. Procédé pour intégrer une structure de nuage interne (109) dans un environnement d'entreprise existante avec une pluralité de ressources d'entreprise préexistantes, le procédé comprenant :
agencer la structure de nuage interne (109) pour communiquer électroniquement avec une ou plusieurs structures d'informatique en nuage tierces externes (117),
la ou les structures d'informatique en nuage tierces (117) ne faisant pas partie de l'entreprise existante ;
établir une interface de communications de service (113) entre la structure de nuage interne (109) et une pluralité d'unités commerciales individuelles au sein de l'environnement d' entreprise ;
établir une interface de communications d'infrastructure (111) entre la pluralité préexistante de ressources d'entreprise (106) et la structure de nuage interne (109) ; et
établir une pluralité de protocoles de communications permettant des communications entre au moins la structure de nuage interne (109), la ou les structures d'informatique en nuage tierces externes (117) et les ressources d'entreprise préexistantes (106).

8. Procédé selon la revendication 7, comprenant en outre raccorder de manière communicative la pluralité préexistante de ressources d'entreprise (106) à l'interface de communications de service (113).

9. Procédé selon la revendication 7, comprenant en outre raccorder la pluralité d'unités commerciales individuelles au sein de l'environnement d'entreprise à l'interface de communications d'infrastructure (111).

10. Procédé selon la revendication 7, comprenant en outre fournir une liaison de communications entre la pluralité d'unités commerciales individuelles au sein de l'environnement d'entreprise et la ou les structures d'informatique en nuage tierces externes (117).

11. Procédé selon la revendication 7, comprenant en outre établir un protocole de communications commun entre la structure de nuage interne (109), la pluralité d'unités commerciales individuelles et la pluralité de ressources d'entreprise préexistantes (106).

12. Support de stockage non transitoire lisible par processeur stockant des instructions qui, lors de son exécution par un processeur, amène le processeur à réaliser un procédé pour intégrer une structure de nuage interne dans un environnement d'entreprise avec une pluralité de ressources d'entreprise préexistantes conformément à un procédé selon l'une quelconque des revendications 7 à 11.
